Europäisches Patentamt

European Patent Office

Office européen des brevets

(11) Veröffentlichungsnummer : **0 575 343 B1**

# (12) EUROPÄISCHE PATENTSCHRIFT

(45) Veröffentlichungstag der Patentschrift :
**03.05.95 Patentblatt 95/18**

(51) Int. Cl.$^6$ : **F16H 25/00, B29C 45/68**

(21) Anmeldenummer : **92903185.4**

(22) Anmeldetag : **13.01.92**

(86) Internationale Anmeldenummer :
**PCT/AT92/00003**

(87) Internationale Veröffentlichungsnummer :
**WO 92/11993 23.07.92 Gazette 92/19**

(54) **VORRICHTUNG ZUR DURCHFÜHRUNG EINER ZWEISTUFIGEN LINEAREN BEWEGUNG.**

(30) Priorität : **14.01.91 AT 53/91**
**14.11.91 AT 22579/91**

(43) Veröffentlichungstag der Anmeldung :
**29.12.93 Patentblatt 93/52**

(45) Bekanntmachung des Hinweises auf die
Patenterteilung :
**03.05.95 Patentblatt 95/18**

(84) Benannte Vertragsstaaten :
**AT DE IT**

(56) Entgegenhaltungen :
**DE-A- 2 013 649**
**DE-A- 2 947 021**
**DE-A- 3 006 609**
**DE-C- 172 852**
**DE-C- 663 217**
**PATENT ABSTRACTS OF JAPAN vol. 13, no.**
**591 (M-913)26. Dezember 1989**

(73) Patentinhaber : **Engel Maschinenbau**
**Gesellschaft m.b.H.**
**A-4311 Schwertberg (AT)**

(72) Erfinder : **LEONHARTSBERGER, Heinz**
**Perger Strasse 13**
**A-4311 Schwertberg (AT)**
Erfinder : **EPPICH, Stefan**
**Bahnhofstrasse 104**
**A-4341 Arbing (AT)**
Erfinder : **KAPPELMÜLLER, Werner**
**Lina 8**
**A-4311 Schwertberg (AT)**

(74) Vertreter : **Torggler, Paul, Dr. et al**
**Wilhelm-Greil-Strasse 16**
**A-6020 Innsbruck (AT)**

EP 0 575 343 B1

## Beschreibung

Die Erfindung bezieht sich auf eine Vorrichtung nach dem Oberbegriff von Anspruch 1, wie sie aus der DE-A 20 13 649 bekannt ist.

Bei den verschiedensten Maschinen ist es notwendig, daß Maschinenteile lineare Bewegungen durchführen. Als Beispiele seien Werkzeugmaschinen, Spritzgießmaschinen und Roboter genannt.

Während es bei manchen Maschinen in erster Linie wichtig ist, daß die Bewegung schnell durchgeführt wird (beispielsweise bei Robotern), werden bei anderen Maschinen in erster Linie hohe Kräfte verlangt.

Bei Spritzgießmaschinen, beispielsweise bei der Formschließeinrichtung wechseln die Anforderungen während des Bewegungsvorganges. So soll beim Schließen des Formwerkzeuges die bewegbare Formhälfte zuerst möglichst schnell nach einem vorgegebenen Geschwindigkeitsprofil bewegt werden, wobei während dieser Bewegung relativ wenig Kraft aufgewendet werden muß, worauf bei der fortgeführten Bewegung ein hoher Druck notwendig ist.

Es ist allgemein bekannt, daß mittels mechanischer Einrichtungen, beispielsweise mittels Schraubtrieben und hier insbesondere mittels Kugelgewindetrieben schnelle lineare Bewegungen durchgeführt werden können. Andererseits wird hoher Druck, insbesondere mit Hydraulikeinrichtungen so wie mit hydraulischen Kolbenzylindereinheiten erzielt.

Die DE-A1-20 13 649 zeigt eine Schließvorrichtung für Spritzgußmaschinen, mit der eine mehrstufige lineare Bewegung durchführbar ist. Diese Schließvorrichtung weist einen Spindelantrieb und einen Hydraulikkolbenantrieb auf. Beide Antriebe werden getrennt beaufschlagt und aktiviert.

Aufgabe der Erfindung ist es, eine verbesserte kombinierte, mechanisch-hydraulische Vorrichtung zu schaffen, die in der Lage ist, mehrstufig zu arbeiten und mit der abwechselnd sowohl schnelle Bewegungen als auch ein hoher Druck erzielt werden können.

Dies wird mit den Merkmalen des kennzeichnenden Teiles des Anspruches 1 erreicht.

Nachfolgend werden verschiedene Ausführungsbeispiele der Erfindung anhand der Figuren der Zeichnungen beschrieben.

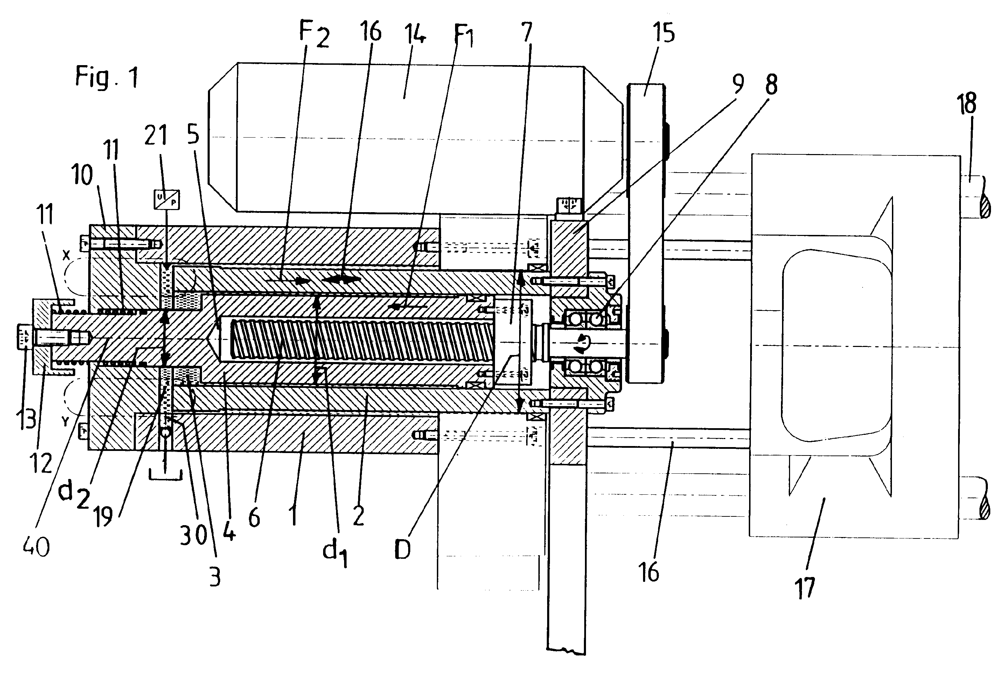

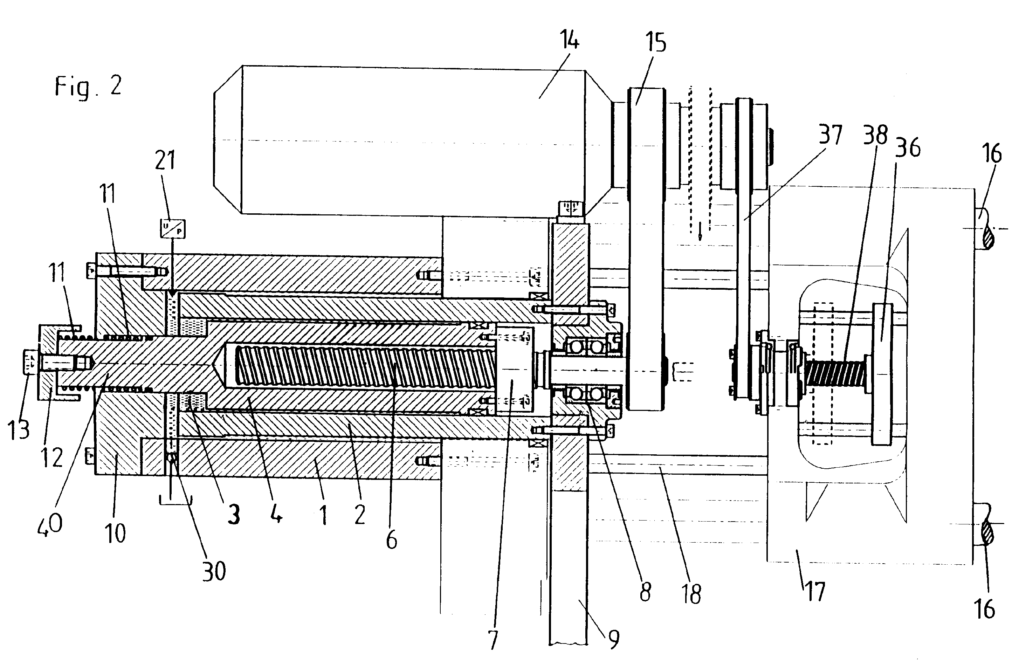

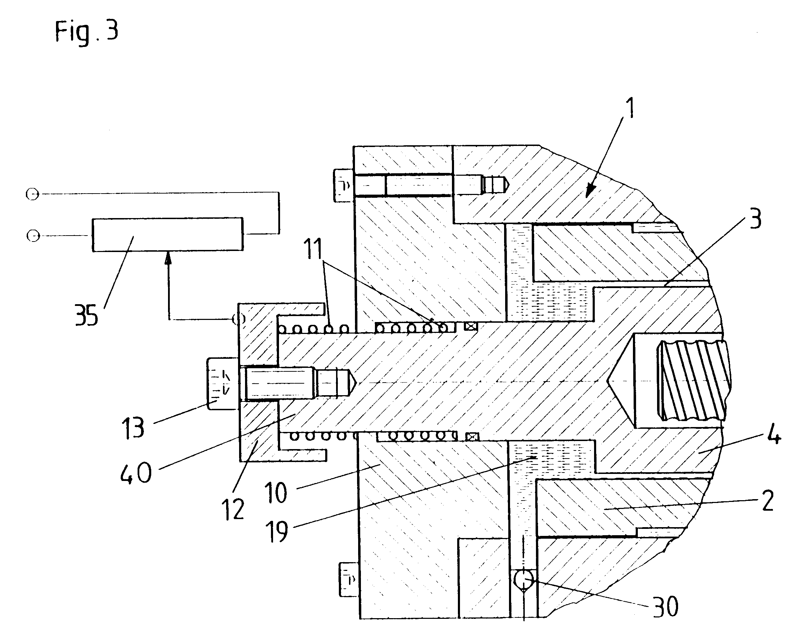

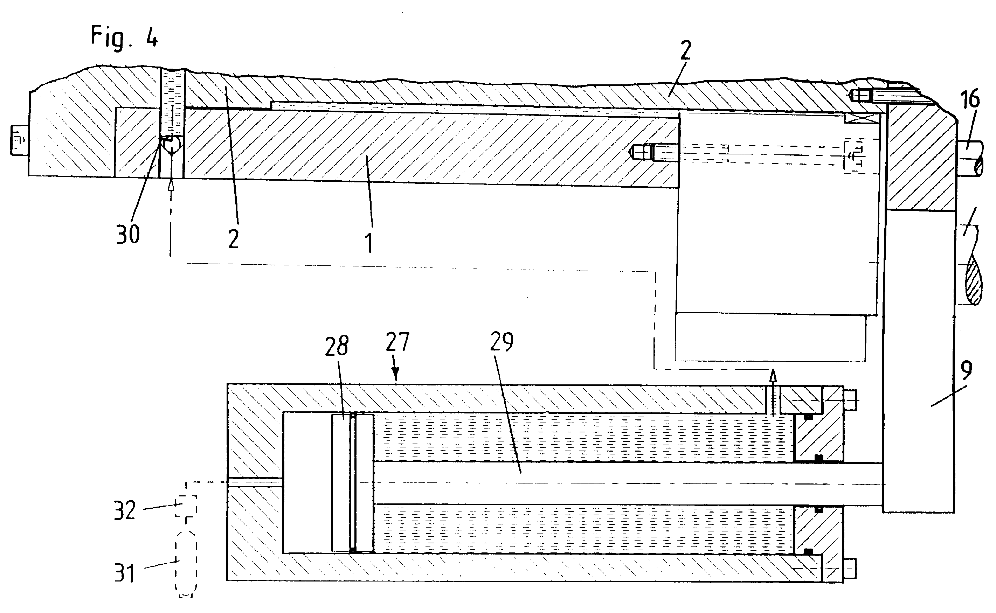

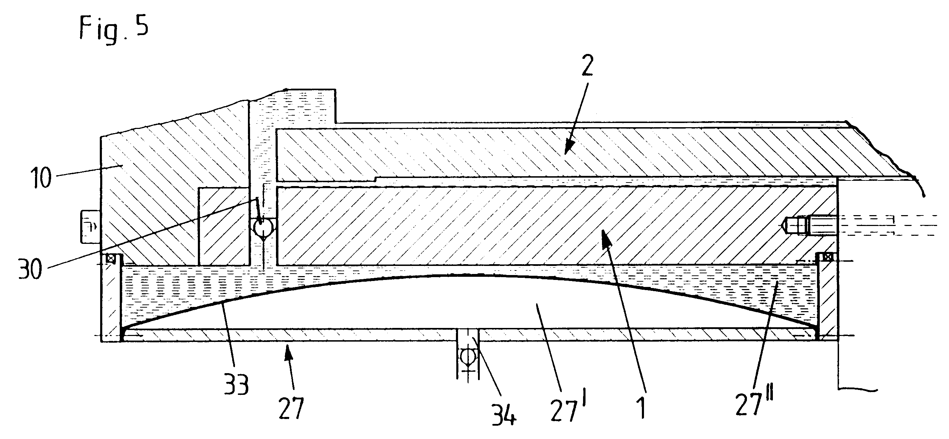

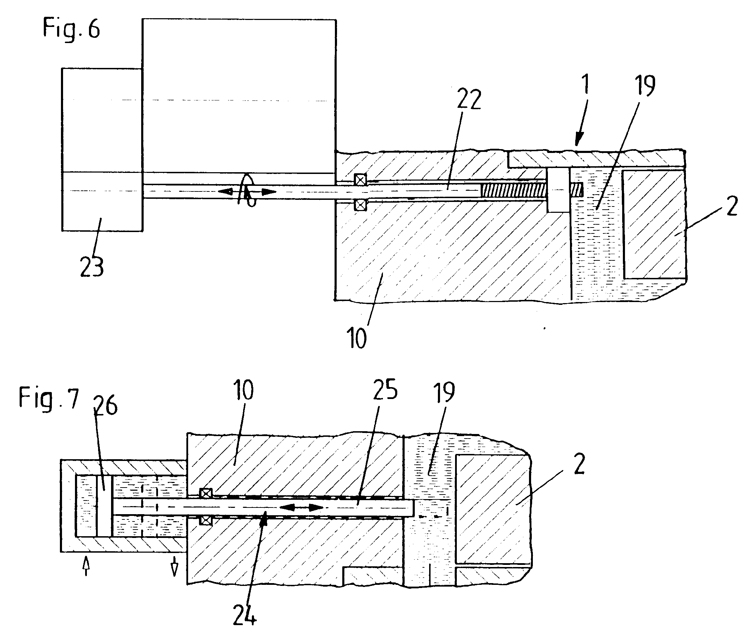

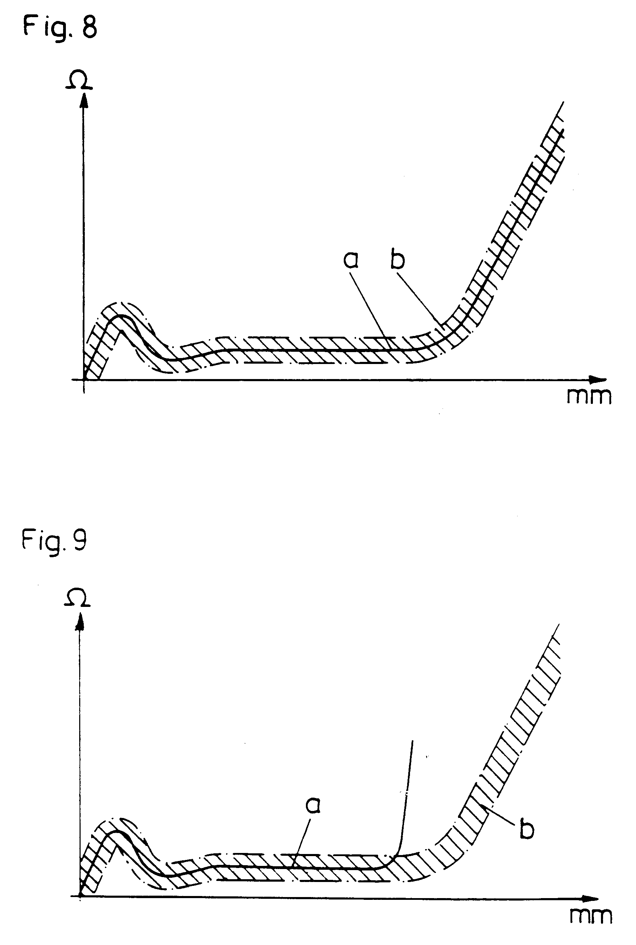

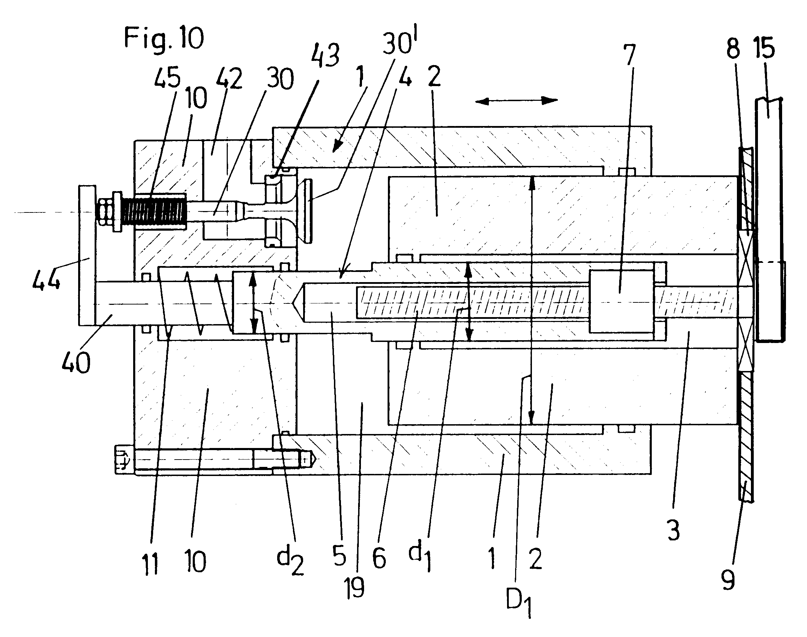

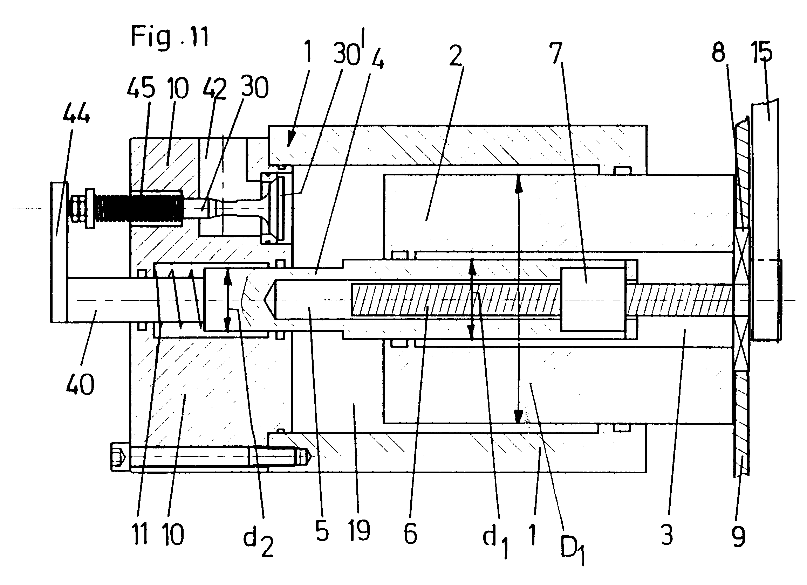

Die Fig. 1 zeigt einen schematischen Axialschnitt durch die erfindungsgemäße Vorrichtung, die Fig. 2 zeigt die gleiche Ansicht wie Fig. 1 bei einem weiteren Ausführungsbeispiel der Erfindung, die Fig. 3 zeigt einen Axialschnitt durch den hinteren Bereich der Vorrichtung, die Fig. 4 zeigt einen Axialschnitt durch einen Hilfszylinder, die Fig. 5 zeigt einen Schnitt durch ein weiteres Ausführungsbeispiel eines Hilfszylinders, die Fig. 6 und 7 zeigen die Details X und Y der Fig. 1, d. h. Beispiele zusätzlicher Verdrängungskörper, im Schnitt, die Fig. 8 zeigt ein Diagramm des Wegaufnehmersignals bei einem Standard - Schließvorgang, die Fig. 9 zeigt ein Diagramm des Wegaufnehmersignals bei Ansprechen des Formschutzes und die Fig. 10 bis 12 zeigen jeweils einen Axialschnitt durch ein weiteres Ausführungsbeispiel der erfindungsgemäßen Vorrichtung in verschiedenen Stadien der Bewegung.

Die wesentlichen Teile der erfindungsgemäßen Vorrichtung sind der Hydraulikzylinder 1, der Hydraulikkolben 2, der als Plunger ausgeführt ist und der einen Hohlraum 3 aufweist, in den ein ebenfalls im Hydraulikzylinder 1 befindlicher Tauchkolben 4 ragt. Der Tauchkolben 4 weist ebenfalls einen Hohlraum auf, in dem eine gehäusefeste Spindel 6 ragt. Die Spindel 6 ist mittels eines Lagers 8, vorzugsweise eines Doppellagers 8 drehbar aber axial unverschiebbar in einer Trägerplatte 9 gelagert. Die Spindel 6 ragt in ein Muttergewinde 7 im Tauchkolben 4. Durch Drehung der Spindel 6 wird der Tauchkolben 4 in der Richtung des Doppelpfeiles der Fig. 1 und 10 bewegt.

In den gezeigten Ausführungsbeispielen findet die erfindungsgemäße Vorrichtung als Schließzylinder einer Spritzgießmaschine Verwendung. Die Trägerplatte 9 ist daher über Stangen 16 mit der bewegbaren Formhälfte 17 verbunden. Die Formhälfte 17 ist in herkömmlicher Weise auf Holmen 18 geführt.

Der Tauchkolben 4 ist dabei in der hinteren Stirnplatte 10 des Hydraulikzylinders 1 mittels einer Feder 11 oder zweier Federpakete 11 gelagert, sodaß der Tauchkolben 4 sowohl nach vorne als auch nach hinten bewegt werden kann. Die Federpakete 11 halten die Tauchkolben 4 in einer 0-Stellung.

Der Tauchkolben 4 weist einen Führungsansatz 40 auf, der durch die Stirnwand 10 des Hydraulikzylinders 1 ragt und durch den der Tauchkolben 4 geführt ist.

Am Tauchkolben 4 ist eine Abdeckplatte 12 angeordnet, die mittels einer Schraube 13 am Tauchkolben 4 gehalten ist.

Die Drehung der Spindel 6 erfolgt mittels eines Elektromotors 14 vorzugsweise eines Servomotors. In den Ausführungsbeispielen ist zwischen dem Elektromotor 14 und der Spindel 6 ein Riemenantrieb 15 vorgesehen, es könnten jedoch auch andere übertragungsmittel Anwendung finden.

Im Hydraulikzylinder 1 ist im Ausführungsbeispiel nach den Fig. 1 bis 5 noch ein sperrbares Rückschlagventil 30 und ein Öldruckaufnehmer 21 vorgesehen. Dieses Rückschlagventil 30 kann vorzugsweise elektrisch oder auch hydraulisch entsperrbar sein.

Die Bewegung der Formhälfte 17 erfolgt in zwei Abschnitten. Zuerst, bevor die Hydraulikflüssigkeit ausreichend unter Druck gesetzt ist, rein mechanisch dadurch, daß die Spindel 6 zum Tauchkolben 4 eine Relativbewegung durchführt und sich zusammen mit der Trägerplatte 9 nach rechts bewegt und zweitens nach einem entsprechenden Druckaufbau hydraulisch, da, wenn die Formhälfte 17 auf Widerstand stößt und die Spindel 6 sich nicht weiter bewegen kann, der Tauchkolben 4 nach links bewegt wird und die Hydraulikflüssigkeit im Zylinderraum 19 unter Druck gesetzt und der Hydraulikkolben 2 dadurch nach rechts bewegt wird. Die Spindel 6 wird vom Elektromotor 14 gedreht und lagert axial unverschiebbar in der Trägerplatte 9. Weiters greift die Spindel 6 in ein Muttergewinde im Tauchkolben 4 ein.

Die Verfahrkraft des Hydraulikkolbens 2 die gleich der Schließkraft der Spritzgießform ist, ergibt sich dabei aus der folgenden Formel
Dabei ist P der Hydraulikdruck und $F_2$ die Schließkraft.

Vorteilhaft ist die Kolbenfläche $\dfrac{(d_1{}^2 - d_2{}^2)\,\pi}{4}$ des Tauchkolbens 4 kleiner als die Kolbenfläche $\dfrac{(D_1^2 - d_1{}^2)\,\pi}{4}$ des Hydraulikkolbens 2.

Der Hydraulikdruck im Hydraulikzylinder 1 kann durch zusätzliche Mittel erhöht werden.

Die Fig. 6 zeigt eine im Hydraulikzylinder 1 gelagert Gewindespindel 22, die mittels eines Elektromotors 23 in den Zylinderraum 19 einschraubbar ist, dort das Hydraulikmedium verdrängt und dadurch den Druck auf den Hydraulikkolben 2 erhöht.

Die Fig. 7 zeigt einen hydraulischen Druckübersetzer 24, dessen Kolbenstange (Stößel) 25 ebenso wie die Spindel 22 in den Zylinderraum 19 ragt und dort zu einer Mediumverdichtung beiträgt. Der hydraulische Druckübersetzer 24 wird mittels eines Hydraulikkolbens 26 bewegt und ist, da der Hydraulikkolben 26 beidseitig beaufschlagbar ist, in der Richtung des Doppelpfeiles bewegbar.

In einem weiteren Ausführungsbeispiel ist ein als Hilfszylinder dienender Behälter 27 vorgesehen, in den ein Kolben 28 ragt, der über eine Kolbenstange 29 mit der Trägerplatte 9 und somit mit dem Hydraulikkolben 2 verbunden ist.

Wenn der Hydraulikkolben 2 nach rechts bewegt wird, muß Hydraulikflüssigkeit in den Zylinderraum 19 eingebracht werden, um das Kolbenvolumen auszugleichen.

Dies erfolgt im Ausführungsbeispiel durch den vom Behälter 27 gebildeten Hilfszylinder, der über ein sperrbares Ventil 30 mit dem Zylinderraum 19 des Hydraulikzylinders 1 verbunden ist. An den Behälter 27 kann eine Druckgasflasche 31 mit einer Ventileinheit 32 angeschlossen sein, wobei das Druckgas die Kolbenbewegung nach rechts unterstützt.

Prinzipiell wäre es auch möglich, die Hydraulikflüssigkeit mittels eines anders konstruierten Ausgleichgefäßes in den Hydraulikzylinder 1 einzubringen. Fig. 5 zeigt einen kreisrunden Behälter 27 mit einer Membran 33, der den Hydraulikzylinder 1 umgibt und die Funktion eines Ausgleichsgefäßes hat. Der Behälter 27 ist über ein Ventil 34 an eine Druckgasleitung angeschlossen. Die Membran 33 teilt den Be

hälter 27 in eine Kammer 27' und eine Kammer 27″, wobei sich in der Kammer 27' ein Gas und in der Kammer 27″ eine Hydraulikflüssigkeit befindet.

Wird Hydraulikflüssigkeit durch die Kolbenbewegung aus dem Hydraulikzylinder 1 in den Behälter 27 gedrückt, wird das Gas in der Kammer 27' komprimiert. Beim nächsten Arbeitszyklus drückt das komprimierte Gas die Hydraulikflüssigkeit aus dem Behälter 27 in den Zylinderraum 19 des Hydraulikzylinders 1.

Der Druckaufnehmer 21 hat die Aufgabe zu überwachen, daß der Druck im Hydraulikzylinder 1 nicht ungewollt nachläßt (Undichtheiten). Der Druckaufnehmer 21 ist über einen Rechner mit dem Motor 14 verbunden. Sobald der Druck im Zylinderraum 3 auch nur geringfügig abfällt, erfolgt eine Korrektur durch Drehen des Motors 14 und Nachdrehen der Spindel 6.

Im Ausführungsbeispiel nach den Fig. 10 bis 12 ist das Füllventil 30 ein Tellerventil und wird von einer Feder 45 in die Schließstellung gedrückt. Der Ölzufluß in den Zylinderraum 19 erfolgt über einen Kanal 42. Der Ventilteller 30' liegt in der Schließstellung an einer Büchse 43 an.

Am Führungsansatz 40 des Tauchkolbens 4 ist im davon im rechten Winkel abstehender Anschlagteil 44 angeformt oder befestigt.

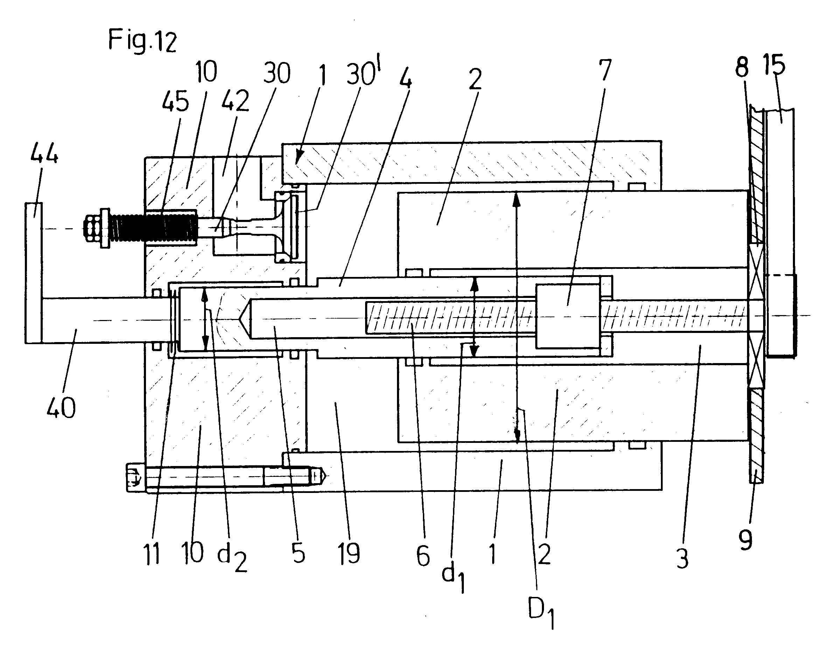

Die Bewegung des Hydraulikkolbens 2 erfolgt wiederum in zwei Abschnitten. Zuerst, bevor die Hydraulikflüssigkeit ausreichend unter Druck gesetzt ist, rein mechanisch dadurch, daß die Spindel 6 zum Tauchkolben 4 eine Relativbewegung durchführt und sich zusammen mit der Trägerplatte 9 für den Elektromotor 14 nach rechts bewegt. Dabei wird der Tauchkolben 4 von der Feder 11 in seine rechte Endstellung gehalten. Der Anschlag 44 drückt auf das Füllventil 30 und hält es offen (Fig. 10). Wenn die Formhälfte 17 auf Widerstand stößt und die Spindel 6 sich nicht axial weiter bewegen kann, wird der Tauchkolben 4 von der Spindel 6 gegen den Druck der Feder 11 nach links bewegt. Der Abschnitt des Tauchkolbens 4 mit größerem Durchmesser fährt aus dem Hydraulikkolben 2 in den Zylinderraum 19 und die Hydraulikflüssigkeit im Zylinderraum 19 wird unter Druck gesetzt. Der hydraulische Druckaufbau wird dadurch möglich gemacht, daß der Anschlag 44 vom Füllventil 30 entfernt und letzteres durch die Feder 45 geschlossen wird (Fig. 12). Durch den hydraulischen Druckaufbau im Zylinderraum 19 wird der Hydraulikkolben 2 mit hohem Druck geringfügig nach rechts bewegt.

Wie aus der Fig. 3 ersichtlich, ist der Tauchkolben 4 vorzugsweise an einen Wegaufnehmer 35 angeschlossen. Dieser Wegaufnehmer 35, der beispielsweise ein Ohmscher Wegaufnehmer ist, kann beispielsweise als Formschlußsicherung dienen. Bei der Inbetriebnahme der Vorrichtung wird von dem Wegaufnehmer 35 ein Signal an den Elektromotor 14 abgegeben.

Die Wirkungsweise des Formschutzes ist die folgende:

Vorerst wird in einem Arbeitsgang die Form geschlossen und der Istwert der vom Wegaufnehmer 35 gelieferten Spannung gemäß dem Diagramm der Fig. 8 gespeichert. In dem Diagramm zeigt die Ordinate das jeweilige Signal des Wegaufnehmers und die Abszisse den Schließhub. Die Kurve a kennzeichnet den Istwert beim Schließen.

Zu der Kurve a wird ein Toleranzband b festgelegt, welches den Formschlußbereich kennzeichnet.

Bleibt die Kurve a bei den darauffolgenden Schließvorgängen innerhalb des Toleranzbandes b, wird der Schließvorgang ungestört beendet.

Die Fig. 9 zeigt das gleiche Diagramm wie die Fig. 8 beim Ansprechen des Formschlusses. In dem Moment, wo die Signale vom Wegaufnehmer 35 gemäß der Kurve a den Formschutzbereich b verlassen, wird der Elektromotor 14 abgestellt oder umgeschalten und eine Beschädigung der Form verhindert.

Wie aus der Fig. 2 ersichtlich, kann der Elektromotor 14 außer zum Drehen der Spindel 6 auch zur Betätigung weiterer Zusatzeinrichtungen dienen, so z. B. kann dieser mit einer Ausdrehvorrichtung für Kernzüge gekuppelt sein sowie mit einer Auswerferplatte 36, die vom Elektromotor 14 über einen Riemenantrieb 37 und eine Spindel 38 betätigt wird.

## Patentansprüche

1. Vorrichtung zur Durchführung einer zweistufigen linearen Bewegung, mit einer feststehenden Baueinheit mit einem Hydraulikzylinder (1) mit mindestens einem Füllventil und einer Einrichtung, um im Hydraulikzylinder einen Druck aufzubauen, und mit einer bewegbaren Baueinheit mit einem Hydraulikkolben (2) und einer von einem Elektromotor drehbaren Spindel (6), dadurch gekennzeichnet, daß der Hydraulikkolben (2) einen Hohlraum (3) aufweist, in den ein Tauchkolben (4) ragt, und daß der Hydraulikkolben (2) die Spindel (6) trägt, die in eine verdrehsicher am oder im Tauchkolben (4) gehaltenen Mutter ragt, wobei der Tauchkolben (4) mittels der Spindel (6) im Hydraulikkolben und im Hydraulikzylinder, um in diesem den Druck aufzubauen, axial verschiebbar ist.

2. Vorrichtung nach Anspruch 1, dadurch gekennzeichnet, daß der Tauchkolben (4) von mindestens einer Feder (11) beaufschlagt wird.

3. Vorrichtung nach Anspruch 1, dadurch gekennzeichnet, daß der Tauchkolben (4) einen Führungsansatz aufweist, der durch die Stirnwand (10) des Hydraulikzylinders (1) ragt.

4. Vorrichtung nach Anspruch 1, dadurch gekennzeichnet, daß die Spindel (6) mittels einer lösbaren Kupplung mit der Abtriebswelle des Elektromotors (14) verbunden ist.

5. Vorrichtung nach mindestens einem der Ansprüche 1 bis 4, dadurch gekennzeichnet, daß ein Verdrängungskörper, beispielsweise eine Spindel oder ein Stößel (25) in den Zylinderraum (19) des Hydraulikzylinders (1) einführbar ist.

6. Vorrichtung nach mindestens einem der Ansprüche 1 bis 5, gekennzeichnet durch einen Hilfszylinder oder Behälter (27), dessen Zylinder- bzw. Behälterraum mit dem Zylinderraum (19) des Hydraulikzylinders (1) in Verbindung ist.

7. Vorrichtung nach Anspruch 6, dadurch gekennzeichnet, daß sich im Behälter (27) ein Kolben (28) befindet, der mit der bewegbaren Baueinheit, insbesondere mit dem Hydraulikkolben (2) gekuppelt ist und sich gleichförmig mit dieser bewegt.

8. Vorrichtung nach Anspruch 6, dadurch gekennzeichnet, daß sich im Behälter (27) eine Membran (33) od. dgl. befindet, die den Behälter (27) in zwei Kammern (27', 27") teilt, wobei eine Kammer (27") mit dem Hydraulikzylinder (1) verbunden ist, während die andere Kammer (27') einen Anschluß (34) für den Einlaß von Druckgas aufweist.

9. Vorrichtung nach mindestens einem der Ansprüche 1 bis 8, dadurch gekennzeichnet, daß der Tauchkolben (4) an einen Wegaufnehmer (35) od. dgl. angeschlossen ist, der ein Signal an einen Rechner sendet, wobei der Rechner bei einer Signaländerung, die ein vorgegebenes Toleranzband überschreitet, den Motor abstellt oder zurücklaufen läßt.

10. Vorrichtung nach Anspruch 1, dadurch gekennzeichnet, daß die Kolbenfläche des Tauchkolbens (4) kleiner ist als die Kolbenfläche des Hydraulikkolbens (2).

11. Vorrichtung nach Anspruch 8, dadurch gekennzeichnet, daß der Behälter (27) den Hydraulikzylinder (1) mantelartig umgibt.

12. Vorrichtung nach mindestens einem der Ansprüche 1 bis 11, dadurch gekennzeichnet, daß an den Zylinderraum (19) des Hydraulikzylinders (1) ein Druckaufnehmer (21) angeschlossen ist, der über einen Rechner mit dem Elektromotor (14) vorzugsweise Servomotor in Verbindung steht.

**Claims**

1. Apparatus for carrying out a two-stage linear movement, having a stationary structural unit with a hydraulic cylinder (1) with at least one filling valve and a means for building up a pressure in the hydraulic cylinder, and a movable structural unit with a hydraulic piston (2) and a spindle (6) which is rotatable by an electric motor, characterised in that the hydraulic piston (2) has a cavity (3) into which a plunger piston (4) projects, and that the hydraulic piston (2) carries the spindle (6) which projects into a nut which is held non-rotatably on or in the plunger piston (4), wherein the plunger piston (4) is axially displaceable by means of the spindle (6) in the hydraulic piston and in the hydraulic cylinder in order to build up the pressure in same.

2. Apparatus according to claim 1 characterised in that the plunger piston (4) is acted upon by at least one spring (11).

3. Apparatus according to claim 1 characterised in that the plunger piston (4) has a guide projection which projects through the end wall (10) of the hydraulic cylinder (1).

4. Apparatus according to claim 1 characterised in that the spindle (6) is connected to the output shaft of the electric motor (14) by means of a releasable coupling.

5. Apparatus according to at least one of claims 1 to 4 characterised in that a displacement body, for example a spindle or a pushrod (25), can be introduced into the cylinder chamber (19) of the hydraulic cylinder (1).

6. Apparatus according to at least one of claims 1 to 5 characterised by an auxiliary cylinder or container (27) whose cylinder or container chamber is in communication with the cylinder chamber (19) of the hydraulic cylinder (1).

7. Apparatus according to claim 6 characterised in that disposed in the container (27) is a piston (28) which is coupled to the movable structural unit, in particular to the hydraulic piston (2), and moves uniformly with same.

8. Apparatus according to claim 6 characterised in that disposed in the container (27) is a diaphragm (33) or the like which divides the container (27) into two chambers (27', 27''), wherein one chamber (27'') is communicated with the hydraulic cylinder (1) while the other chamber (27') has a connection (34) for the inlet of pressure gas.

9. Apparatus according to at least one of claims 1 to 8 characterised in that the plunger piston (4) is connected to a travel sensor (35) or the like which sends a signal to a computer, wherein upon a change in the signal which exceeds a predetermined tolerance band the computer switches off or reverses the motor.

10. Apparatus according to claim 1 characterised in that the piston area of the plunger piston (4) is smaller than the piston area of the hydraulic piston (2).

11. Apparatus according to claim 8 characterised in that the container (27) surrounds the hydraulic cylinder (1) in a jacket-like manner.

12. Apparatus according to at least one of claims 1 to 11 characterised in that connected to the cylinder chamber (19) of the hydraulic cylinder (1) is a pressure sensor (21) which is connected by way of a computer to the electric motor (14), preferably a servomotor.

**Revendications**

1. Dispositif destiné à effectuer un mouvement linéaire à deux étapes, comportant un élément fixe avec un cylindre hydraulique comprenant au moins une valve de remplissage et un dispositif destiné à établir une pression dans le cylindre hydraulique et comportant un élément mobile avec un piston hydraulique (2) et une vis (6) pouvant être tournée par un moteur électrique, caractérisé en ce que le piston hydraulique comprend un espace creux (3) dans lequel pénètre un piston plongeur (4) et en ce que le piston hydraulique (2) porte la vis (6) qui pénètre dans un écrou maintenu sans possibilité de rotation sur ou dans le piston plongeur (4), le piston plongeur (4) pouvant être déplacé axialement en translation au moyen de la vis (6) dans le piston hydraulique et dans le cylindre hydraulique, pour établir la pression dans celui-ci.

2. Dispositif selon la revendication 1, caractérisé en ce que le piston plongeur (4) est sollicité par au moins un ressort (11).

3. Dispositif selon la revendication 1, caractérisé en ce que le piston plongeur (4) comporte un appendice de guidage qui fait saillie à travers la paroi frontale du cylindre hydraulique (1).

4. Dispositif selon la revendication 1, caractérisé en ce que la vis (6) est liée à l'arbre de sortie du moteur électrique (14) au moyen d'un accouplement libérable.

5. Dispositif selon au moins une des revendications 1 à 4, caractérisé en ce qu'un déplaceur, par exemple une vis ou un poussoir (25) peut être introduit dans la chambre de cylindre (19) du cylindre hydraulique (1).

6. Dispositif selon au moins une des revendications 1 à 5, caractérisé par un cylindre auxiliaire ou un réservoir (27) dont la chambre de cylindre ou de réservoir est reliée à la chambre de cylindre (19) du cylindre hydraulique (1).

7. Dispositif selon la revendicaton 6, caractérisé en ce qu'un piston (28) se trouve dans le récipient (27), piston qui est accouplé à l'élément mobile, notamment au piston hydraulique (2), et qui se déplace avec celui-ci, de façon égale.

8. Dispositif selon la revendication 6, caractérisé en ce qu'une membrane (33) ou équivalent se trouve dans le récipient (27), membrane qui sépare le récipient (27) en deux chambres (27', 27"), une chambre (27") étant reliée au cylindre hydraulique (1) pendant que l'autre chambre (27') comprend un raccord (34) pour l'admission de gaz comprimé.

9. Dispositif selon au moins une des revendications 1 à 8, caractérisé en ce que le piston plongeur (4) est relié à un capteur de déplacement (35) ou équivalent qui envoie un signal à un calculateur, lequel, dans le cas d'une modification du signal qui dépasse une certaine bande de tolérance, arrête le moteur ou le fait tourner en arrière.

10. Dispositif selon la revendication 1, caractérisé en ce que la surface du piston plongeur (4) est plus petite que la surface du piston hydraulique (2).

11. Dispositif selon la revendication 8, caractérisé en ce que le récipient (27) enveloppe le cylindre (1) à la façon d'une chemise.

12. Dispositif selon au moins une des revendications 1 à 11, caractérisé en ce qu'un capteur de pression (21) est relié à la chambre de cylindre (19) du cylindre hydraulique (1), capteur qui est relié par un calculateur au moteur électrique (14) de préférence un servo-moteur.

Fig. 1

Fig. 2

Fig. 3

EP 0 575 343 B1

Fig. 4

EP 0 575 343 B1

Fig. 5

Fig. 6

Fig. 7

Fig. 8

Fig. 9

Fig.10

Fig.11

EP 0 575 343 B1

Fig.12

EP 0 575 343 B1